# EUROPÄISCHE PATENTANMELDUNG

(11) **EP 0 816 696 A2**
(43) Veröffentlichungstag der Anmeldung: **07.01.1998**
(21) Anmeldenummer: 97109003.0
(22) Anmeldetag: 04.06.1997
(51) Int. Cl.: F16C 11/06

(54) **Verfahren zur Herstellung eines reibungsarmen Kugelgelenkes, sowie reibungsarmes Kugelgelenk**

(30) Priorität: 25.06.1996 DE 19625351
(71) Anmelder: Lemförder Metallwaren AG, 49448 Lemförde (DE)
(72) Erfinder: Epp, Karl-Heinz, 32351 Stemwede-Wehdem (DE); Ey, Gerhard, 32351 Stemwede-Drohne (DE); Bröker, Klaus, 49434 Wallenhorst (DE); Wellerding, Martin, 49401 Damme (DE)

(57) **Zusammenfassung**

Es wird ein Verfahren zur Herstellung eines reibungsarmen Kugelgelenkes und ein Kugelgelenk, hergestellt nach diesem Verfahren vorgestellt, wobei ein Kugelzapfen 1 mit einer daran angeformten Gelenkkugel 1.1 unter Zwischenschaltung einer zumindest bereichsweise außenzylindrischen Lagerschale 2 in einen Einsatzring 3 eingefügt, dieser Einsatzring 3 anschließend mit seinem Außengewinde selbstsichernd in das Innengewinde eines Gehäuses 4 eingeschraubt und nachfolgend der Einsatzring 3 zusätzlich in dem Gehäuse 4 festgesetzt wird.

## Beschreibung

Die Erfindung betrifft ein Verfahren zur Herstellung eines reibungsarmen Kugelgelenkes und ein Kugelgelenk, hergestellt nach diesem Verfahren, gemäß Patentanspruch 1.

Aus GB 2 004 321 A ist ein Axialkugelgelenk bekannt, das zur Verbindung einer Zahnstange mit einer Spurstange eines Kraftfahrzeuges dient. Dieses Gelenk weist ein rohrförmiges Gehäuse auf, das einseitig mit einem Innengewinde versehen ist. Auf der anderen, dem Innengewinde gegenüber liegenden Seite ist in dem Gehäuse eine Lagerfläche ausgeformt, in der die an einem Kugelzapfen angeformte Gelenkkugel lagerbar ist. Der Kugelzapfen durchgreift mit seinem Zapfen das Gehäuse. Als Gegenstück zu dieser Gehäuselagerung ist auf der Anschlußseite der Zahnstange eine Lagerschale vorgesehen, die durch eine in das Innengewinde eingeschraubte Scheibe gegen die Gelenkkugel vorgespannt wird. Das rohrförmige Gehäuse muß auf das Außengewinde der Zahnstange aufgeschraubt werden. Zur Sicherung gegen selbsttätiges Lösen dieser Verbindung ist eine zusätzliche Arrettierung notwendig. Gemäß GB 2 004 321 A geschieht dies durch verkörnen.
Die in dieser Schrift vorgestellte Lösung hat den Nachteil, daß bei einer Lagerung der Gelenkkugel des Kugelzapfens unmittelbar in dem rohrförmigen Gehäuse sowohl die Gelenkkugel, als auch das Gehäuse gehärtet werden müssen.
Bei einer derartigen Lösung ist es jedoch auch möglich, daß sich die Scheibe im Bereich der Gewindetoleranzen in radialer Richtung bewegt.

Der zusätzlich erforderliche Arbeitsgang des Festsetzens der Scheibe kann einerseits dazu führen, daß die einmal eingestellte Vorspannung ungewollt verändert wird, andererseits ist ein selbsttätiges Lösen einer derartigen Verbindung nie ganz auszuschließen. Dies bedeutet ein erhebliches Sicherheitsrisiko.

Es ist Aufgabe der Erfindung, ein Verfahren zur Herstellung eines reibungsarmen Kugelgelenkes zu schaffen, das eine Feineinstellung der Lagerungskennwerte eines nach diesem Verfahren hergestellten Kugelgelenkes ermöglicht und zudem einfach und kostengünstig ist, sowie ein nach diesem Verfahren hergestelltes reibungsarmes Kugelgelenk bereitzustellen.

Gelöst wird diese Aufgabenstellung mit den Merkmalen des Patentanspruches 1. Ausgestaltungen der Erfindung sind Gegenstand der Unteransprüche.

Ein erfindungsgemäßes reibungsarmes Kugelgelenk besteht aus einem Kugelzapfen, der in an sich bekannter Weise einen Zapfenbereich und eine daran angeformte Gelenkkugel aufweist. Dieser Kugelzapfen ist in einer Lagerschale aus einem begrenzt elastischen Material gelagert. Vorteilhaft sind insbesondere zweiteilige Lagerschalen. Die Lagerschale kann außen eine zylindrische Mantelfläche aufweisen. Andere Geometrien der Lagerschale sind ebenfalls möglich. So ist es sehr vorteilhaft, der Lagerschale eine kegelige Außenkontur zu geben, oder diese sphärisch auszuführen.
Die sphärische Innenfläche ist auf jeden Fall der Kontur der Gelenkkugel des Kugelzapfens angepaßt. Mit ihrer äußeren Mantelfläche liegt die Lagerschale formschlüssig in einem Einsatzring. Dieser Einsatzring weist zumindest bereichsweise einen der Außenkontur der Lagerschale angepaßten Innenmantel auf. Vorzugsweise sollte der Einsatzring die Lagerschale gegen selbsttätige axiale Bewegungen sichern. Dazu ist erfindungsgemäß ein gelenkeinwärts gerichteter, radialer Bund an dem Einsatzring angeformt, gegen den sich die Lagerschale abstützt.
Der Einsatzring kann ebenfalls eine Aufnahme für ein Dichtelement, beispielsweise einen außen aufgebrachten Dichtungsbalg, oder einen zwischen Einsatzring und Gehäuse eingelegten Dichtungsring aufweisen.
Der Einsatzring ist mit einem Außengewinde versehen, das in ein entsprechendes Innengewinde in dem Gehäuse des Kugelgelenkes eingeschraubt wird. Hierfür sind unterschiedliche Gewindesteigungen und Gewindearten möglich. Das Gewinde kann spanend oder spanlos in das Gehäuse eingebracht werden.
Es ist vorteilhaft, ein metrisches Feingewinde zu verwenden, da hiermit sehr genau die axiale Einschraubtiefe des Einsatzringes festgelegt werden kann.
Erfindungsgemäß ist auf jeden Fall eine Selbstsicherung des Gewindes vorhanden. Diese kann darin bestehen, daß vor der Montage des Gelenkes ein Klebstoff in die Gewindegänge eingebracht wird, oder indem ein versetztes Gewinde verwendet wird. Einfach und kostengünstig ist ein selbstschneidendes Gewinde. Andere Sicherungsmöglichkeiten sind denkbar und liegen im Bereich des Erfindungsgedankens. Am Außenumfang des Einsatzringes ist ferner ein radial nach außen gerichteter, vorzugsweise umlaufender Bund vorgesehen, der zusätzlich zum Festsetzen des Einsatzringes in dem Kugelgelenkgehäuse dient.

Ein derartiges Kugelgelenk wird hergestellt, indem der Kugelzapfen mit seiner daran angeformten Gelenkkugel unter Zwischenschaltung der Lagerschale in den Einsatzring eingefügt und dieser Einsatzring anschließend mit seinem Außengewinde selbstsichernd in das Innengewinde des Gehäuses eingeschraubt wird. Durch den Formscluß zwischen Einsatzring und Lagerschale stehen beide in Gleitkontakt und die Lagerschale wird somit während des Einschraubvorganges sehr gleichmäßig gegen die Gelenkkugel des Kugelzapfens gepreßt. Die Pressung nimmt mit zunehmendem Einschraubweg des Einsatzringes zu, sodaß der Kugelzapfen merklich schwergängiger zu bewegen ist, je weiter der Einsatzring in das Gehäuse eindringt.
Während des Einschraubens werden die im Kugelgelenk zwischen Lagerschale und Gelenkkugel auftretenden Reibwerte permanent erfaßt. Eine Möglichkeit dieser Messung besteht darin, das Moment zu messen, das aufgewendet werden muß, um den Kugelzapfen auszulenken. Eine weitere Möglichkeit kann darin gesehen werden, das Moment zu messen, welches erforderlich ist, um den Kugelzapfen um seine Mittenachse zu verdrehen. Somit läßt sich unabhängig von Fertigungstoleranzen der Kugelgelenkbauteile der Reibwert sehr genau einstellen. Durch die Selbstsicherung des Gewindes bleibt die gewünschte Einstellung erhalten.
Der Einsatzring wird sicherheitshalber anschließend noch zusätzlich in dem Gehäuse festgesetzt. Das zusätzliche Festsetzen erfolgt beispielsweise durch zurollen oder bereichsweises umbördeln des Gehäuserandes. An dem Einsatzring ist hierfür ein radial nach außen gerichteter, umlaufender Bund vorzusehen. Es gilt dabei zu beachten, daß der Bund in axialer Richtung nicht an dem Gehäuse zur Anlage kommt, sondern daß hier ein Freiraum verbleibt. Dies ist notwendig, um Materialspannungen in dem Einsatzring zu vermeiden, die zur Verfälschung der einmal eingestellten Reibwerte führen könnten.
Oberhalb des äußeren Bundes am Einsatzring kann auch eine Nut zur Aufnahme eines Dichtungsbalges eingebracht werden. Andere Abdichtungen sind möglich oder können ergänzend verwendet werden. So kann beispielsweise ein Dichtring, vorzugsweise aus Gummi, zwischen Gehäuse und Einsatzring eingelegt werden, der durch das Festsetzen des Einsatzringes im Gehäuse in axialer Richtung zusammengepreßt wird und so seine Dichtfunktion erfüllt.
Ein derartiges Kugelgelenk ermöglicht den Einsatz unterschiedlichster Lagerwerkstoffe für die Lagerschale. Eine Wärmebehandlung ist nicht notwendig. Das Kugelgelenk ist spielfrei und reibungsarm.

Ein Ausführungsbeispiel der Erfindung wird nachstehend unter Bezugnahme auf die Zeichnung näher erläutert. Es zeigt:
- **Figur 1**:: Ein erfindungsgemäßes Kugelgelenk im Schnitt,
- **Figur 2**:: ein erfindungsgemäßes Kugelgelenk mit am Außenumfang kegeliger Lagerschale.

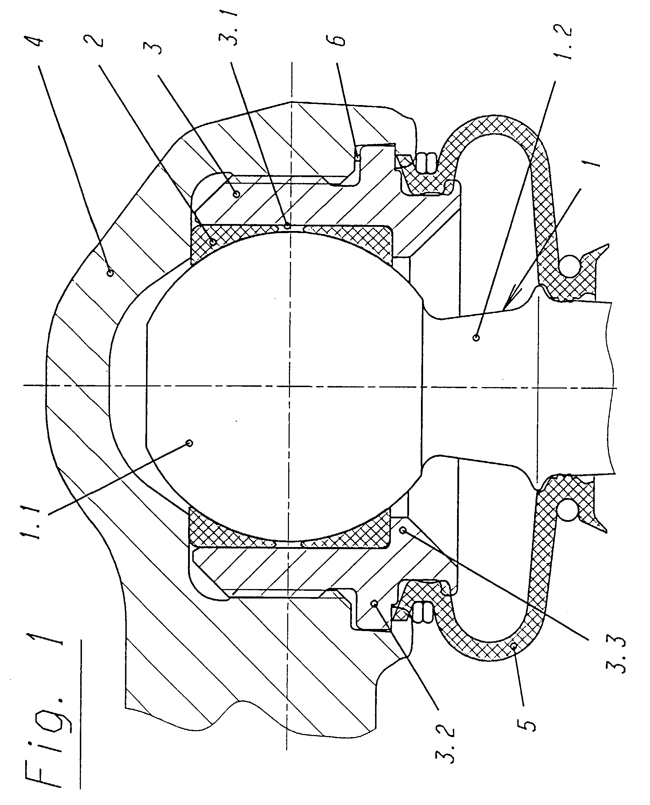

In Figur 1 ist eine bevorzugte Variante eines erfindungsgemäßen Kugelgelenkes im Schnitt dargestellt.
Ein derartiges reibungsarmes Kugelgelenk besteht aus einem Kugelzapfen 1 , der in an sich bekannter Weise einen Zapfenbereich 1.2 und eine daran angeformte Gelenkkugel 1.1 aufweist. Dieser Kugelzapfen ist in einer Lagerschale 2 aus einem begrenzt elastischen Material gelagert. Wie in der Figur 1 dargestellt, wurde bei dieser Ausführung eine zweiteilige Lagerschale verwendet. Beide Lagerschalenteile sind axial relativ zueinander beweglich. Die sphärische Innenfläche ist der Kontur der Gelenkkugel 1.1 des Kugelzapfens angepaßt. Die Lagerschale weist außen eine zylindrische Mantelfläche auf Mit dieser Mantelfläche der Lagerschale liegt sie formschlüssig in einem Einsatzring 3 . Dieser Einsatzring weist zumindest bereichsweise einen zylindrischen Innenmantel 3.1 auf Vorzugsweise sollte der Einsatzring die Lagerschale gegen selbsttätige axiale Bewegungen sichern. Dazu ist erfindungsgemäß ein gelenkeinwärts gerichteter, radialer Bund 3.3 an dem Einsatzring angeformt, gegen den sich die Lagerschale 2 abstützt. Der Einsatzring 3 weist ebenfalls eine Aufnahme für einen Dichtungsbalg 5 auf und ist mit einem Außengewinde versehen, das in ein entsprechendes Innengewinde in dem Gehäuse 4 des Kugelgelenkes eingeschraubt wird. Erfindungsgemäß ist eine Selbstsicherung des Gewindes vorhanden, die vorliegend aus in die Gewindegänge eingebrachtem Klebstoffbesteht.
Am Außenumfang des Einsatzringes ist ferner ein radial nach außen gerichteter, vorzugsweise umlaufender Bund 3.2 vorgesehen, der zusätzlich zum Festsetzen des Einsatzringes in dem Kugelgelenkgehäuse 4 dient.

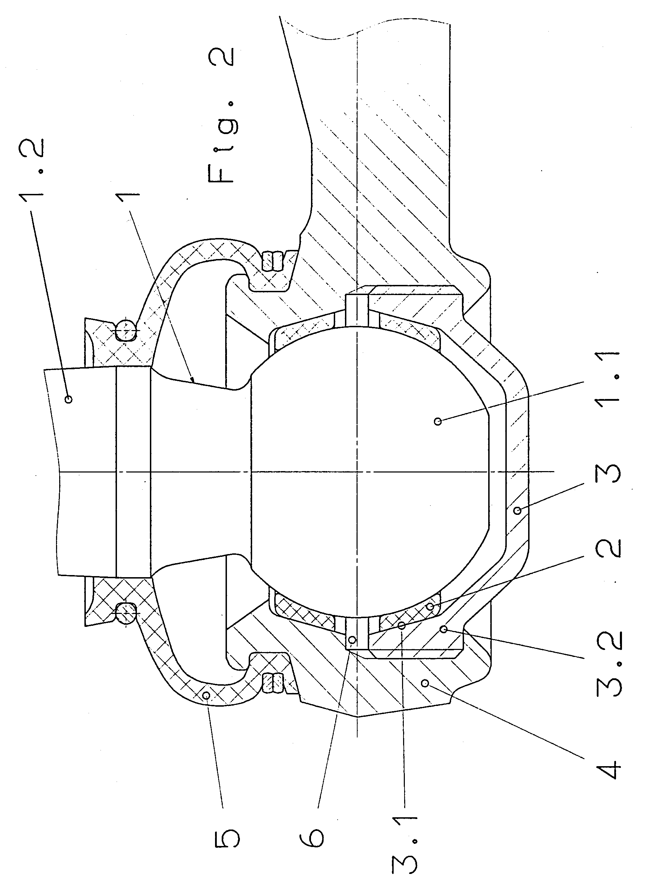

Aus Figur 2 geht ein weiteres erfindungsgemäßes Kugelgelenk hervor. Der Unterschied zu dem in Figur 1 dargestellten Gelenk besteht in der kegeligen Gestaltung der Außenkontur der Lagerschale 2. Auch bei dieser Ausführung eines enfindungsgemäßen Kugelgelenkes ist die Lagerschale zweiteilig. Ein Teil der Lagerschale liegt bei dem dargestellten Kugelgelenk unmittelbar in dem Gehäuse 4 , während der andere Teil von dem Einsatzring 3 aufgenommen und während des Festsetzvorganges gegen die Gelenkkugel 1.1 des Kugelzapfens 1 gedrückt wird. Durch das Eindrehen des Einsatzringes 3 verschiebt sich der Kugelzapfen 1 in axialer Richtung und preßt sich damit immer starker gegen den in dem Gehäuse 4 eingelegten Teil der Lagerschale 2. Bei dem in Figur 2 dargestellten Kugelgelenk kann ein beidseitig offenes Gehäuse 4 verwendet werden. Der Einsatzring 3 verschließt das Gehäuse einseitig. Auf der gegenüberliegenden Seite wird zur Abdichtung ein Dichtungsbalg 5 aufgesetzt.

Ein erfindungsgemäßes reibungsarmes Kugelgelenk wird hergestellt, indem der Kugelzapfen 1 mit seiner daran angeformten Gelenkkugel 1.1 unter Zwischenschaltung der Lagerschale 2 in den Einsatzring 3 eingefügt und dieser Einsatzring anschließend mit seinem Außengewinde selbstsichernd in das Innengewinde des Gehäuses 4 eingeschraubt wird. Durch den Gleitkontakt zwischen Einsatzring 3 und Lagerschale 2 wird die Lagerschale während des Einschraubvorganges sehr gleichmäßig gegen die Gelenkkugel 1.1 des Kugelzapfens 1 gepreßt. Die Pressung nimmt mit zunehmendem Einschraubweg des Einsatzringes zu, sodaß der Kugelzapfen merklich schwergängiger zu bewegen ist, je weiter der Einsatzring in das Gehäuse eindringt.

Während des Einschraubens werden die im Kugelgelenk zwischen Lagerschale 2 und Gelenkkugel 1.1 auftretenden Reibwerte permanent erfaßt. Eine Möglichkeit dieser Messung besteht darin, das Moment zu messen, das aufgewendet werden muß, um den Kugelzapfen 1 auszulenken. Somit läßt sich unabhängig von Fertigungstoleranzen der Kugelgelenkbauteile immer äußerst genau der gewünschte Reibwert einstellen. Durch die Selbstsichetung des Gewindes bleibt die gewünschte Einstellung erhalten.
Der Einsatzring 3 wird anschließend noch zusätzlich durch bereichsweises umbördeln des Gehäuserandes in dem Gehäuse 4 festgesetzt. Er ist hierfür mit einem radial nach außen gerichteten, umlaufenden Bund 3.2 versehen. Es gilt dabei zu beachten, daß dieser Bund in axialer Richtung nicht an dem Gehäuse zur Anlage kommt, sondern daß hier ein Freiraum 6 verbleibt. Dies ist notwendig, um Materialspannungen in dem Einschraubring 3 zu vermeiden, die zur Verfälschung der einmal eingestellten Reibwerte führen könnten.

### Bezugszeichenliste:

- 1: Kugelzapfen
- 1.1: Gelenkkugel
- 1.2: Zapfen
- 2: Lagerschale
- 3: Einsatzring
- 3.1: Mantelfläche
- 3.2: Bund
- 3.3: Bund
- 4: Gehäuse
- 5: Dichtungsbalg
- 6: Freiraum

## Patentansprüche

1. Verfahren zur Herstellung eines reibungsarmen Kugelgelenkes und Kugelgelenk, hergestellt nach diesem Verfahren, wobei ein Kugelzapfen (1) mit einer daran angeformten Gelenkkugel (1.1) unter Zwischenschaltung einer Lagerschale (2) in einen Einsatzring (3) eingefügt, dieser Einsatzring (3) anschließend mit seinem Außengewinde selbstsichernd in das Innengewinde eines Gehäuses (4) eingeschraubt und nachfolgend der Einsatzring (3) zusätzlich in dem Gehäuse (4) festgesetzt wird.

2. Reibungsarmes Kugelgelenk nach Anspruch 1,
dadurch gekennzeichnet, daß
die Selbstsicherung des Gewindes aus einem Stoffschluß besteht.

3. Reibungsarmes Kugelgelenk nach Anspruch 1,
dadurch gekennzeichnet, daß
die Selbstsicherung des Gewindes aus einem selbstschneidenden Gewinde besteht.

4. Reibungsarmes Kugelgelenk nach Anspruch 1,
dadurch gekennzeichnet, daß
die Selbstsicherung des Gewindes aus einem konischen Gewinde besteht

5. Reibungsarmes Kugelgelenk nach Anspruch 1,
dadurch gekennzeichnet, daß
die Selbstsicherung des Gewindes aus einem versetzten Gewinde besteht.

6. Reibungsarmes Kugelgelenk nach einem der Ansprüche 1 bis 5,
dadurch gekennzeichnet, daß
der Einsatzring (3) mit seinem innenzylindrischen Mantelbereich (3.1) die zumindest bereichsweise außenzylindrische Lagerschale (2) aufnimmt und in Bezug zur Gelenkkugel (1.1) des Kugelzapfens (1) zentripetal vorspannt.

7. Reibungsarmes Kugelgelenk nach einem der Ansprüche 1 bis 5,
dadurch gekennzeichnet, daß
der Einsatzring (3) mit seinem innen kegeligen Mantelbereich (3.1) die zumindest bereichsweise außen kegelige Lagerschale (2) aufnimmt und in Bezug zur Gelenkkugel (1.1) des Kugelzapfens (1) zentripetal vorspannt.

8. Reibungsarmes Kugelgelenk nach einem der Ansprüche 1 bis 5,
dadurch gekennzeichnet, daß
der Einsatzring (3) mit seinem innen sphärischen Mantelbereich (3.1) die zumindest bereichsweise außen sphärische Lagerschale (2) aufnimmt und in Bezug zur Gelenkkugel (1.1) des Kugelzapfens (1) zentripetal vorspannt.

9. Reibungsarmes Kugelgelenk nach einem oder mehreren der Ansprüche 1 bis 8,
dadurch gekennzeichnet, daß
die Lagerschale (2) mehrteilig ist.

10. Reibungsarmes Kugelgelenk nach einem oder mehreren der Ansprüche 1 bis 9,
dadurch gekennzeichnet, daß
der Einsatzring (3) einen in radialer Richtung umlaufenden Bund (3.2) aufweist, mit dem er in dem Gehäuse (4) festlegbar ist.

11. Reibungsarmes Kugelgelenk nach einem oder mehreren der Ansprüche 1 bis 10,
dadurch gekennzeichnet, daß
der Einsatzring (3) eine Aufnahme für einen Dichtungsbalg (5) aufweist.
